Europäisches Patentamt

European Patent Office

Office européen des brevets

(11) Veröffentlichungsnummer: **0 168 866**
**A1**

(12) **EUROPÄISCHE PATENTANMELDUNG**

(21) Anmeldenummer: 85200989.3

(22) Anmeldetag: 21.06.85

(51) Int. Cl.⁴: **F 16 C 33/20**, F 16 C 33/04

(30) Priorität: 14.07.84 DE 3425964

(43) Veröffentlichungstag der Anmeldung: 22.01.86
Patentblatt 86/4

(84) Benannte Vertragsstaaten: **AT DE FR GB IT SE**

(71) Anmelder: **KOLBENSCHMIDT Aktiengesellschaft, Christian-Schmidt-Strasse 8/12 Postfach 1351, D-7107 Neckarsulm (DE)**

(72) Erfinder: **Bickle, Wolfgang, Friedenstrasse 13, D-6831 Reilingen (DE)**
Erfinder: **Pfestorf, Harald, Panoramastrasse 18/1, D-7101 Untereisesheim (DE)**

(74) Vertreter: **Rieger, Harald, Dr., Reuterweg 14, D-6000 Frankfurt am Main (DE)**

(54) **Verbundlager-Werkstoff mit Kunststoff-Gleitschicht.**

(57) Bei einem Verbundlager-Werkstoff zur Herstellung von Gleitlagern befindet sich auf einem metallischen Rücken eine eine Gleitschicht tragende Bronzeschicht, wobei die Füllung der Poren der Bronzeschicht und die Gleitschicht aus halogenfreiem Polymerem bestehen.

Um die Formbeständigkeit eines solchen Verbundlager-Werkstoffs bei Temperaturen von wenigstens 180 °C unter den in modernen Brennkraftmaschinen auftretenden Belastungen zu gewährleisten, besteht das halogenfreie Polymere aus Polyethersulfon (PES).

KOLBENSCHMIDT AG
Christian-Schmidt-Str. 8/12      —1—      11. Juli 1984
                                          DRQ/USCHW (1722 P)
7107 Neckarsulm


Prov. Nr. 9208 KS


## Verbundlager-Werkstoff mit Kunststoff-Gleitschicht

Die Erfindung betrifft einen Verbundlager-Werkstoff mit
nachbearbeitbarer Kunststoff-Gleitschicht zur Herstellung
von Gleitlagern, bestehend aus einem metallischen Rücken,
vorzugsweise einem Stahlrücken mit einer porösen
0,1 bis 1,0 mm dicken Bronzeschicht, deren Füllung und
0,05 bis 1,0 mm dicke auf der Bronzeschicht befindliche
Gleitschicht aus in der Wärme form- und chemisch beständigem halogenfreiem Polymerem besteht.

Verbundlager-Werkstoffe stellen eine Kombination zwischen
einem metallischen Rücken und einer aus Kunststoff bestehenden Gleitschicht dar, wobei in aller Regel zwischen der
Gleitschicht und dem metallischen Rücken eine
0,1 bis 0,5 mm dicke Bronzeschicht - Zinn- oder Zinnbleibronze - porös aufgesintert oder aufgespritzt ist. Die
Füllung der Poren der Bronzeschicht und die auf der
Bronzeschicht befindliche 0,01 bis 0,5 mm dicke Gleitschicht bestehen bevorzugt aus Polytetrafluoräthylen
(PTFE), Polyvinyldenfluorid (PVDF) oder Polyoximethylen
(POM) mit die Gleiteigenschaften verbessernden Zusätzen
von Blei, Molybdänsulfid und/oder Graphit in einer Menge
von 5 bis 40 Gew.%. Die poröse Bronzeschicht sichert eine
sehr gute Haftung für den jeweils verwendeten Kunststoff
zum Stahlrücken. Die Verbindung mit dem metallischen Rücken garantiert, daß die aus den Verbundlager-Werkstoff hergestellten Lagerelemente hinsichtlich Preßsitz, elastischer Eigenschaften und Wärmeausdehnung den aus metallischen Verbundlager-Werkstoffen gefertigten Lagerelementen sehr ähnlich sind und daher auch in dünnwandiger Ausführung gut eingesetzt werden können. Gegenüber massiven Kunststoff-Lagerwerstoffen haben die Verbundlager-Werkstoffe mit Kunststoff-Gleitschicht den Vorteil erhöhter Wärmeleitfähigkeit und Festigkeit. Die aus diesem Verbundlager-Werkstoff hergestellten Lagerelemente sind im allgemeinen relativ hoch bis ca. 150 N/mm$^2$ belastbar, allerdings nur bei außerordentlich niedrigen Gleitgeschwindigkeiten von etwa 1 m/s. Eine Gleitgeschwindigkeit von 2 m/s ist als echte Grenze bei Trockenlauf und von 3 m/s bei Initialschmierung anzusehen. Aus diesem Grunde werden solche Verbundlager-Werkstoffe vorteilhaft beispielsweise für oszillierende Bewegungen eingesetzt, wie beispielsweise für Gelenklager und Führungsbuchsen in Stoßdämpfern für Kraftfahrzeuge (VDI-Z. 110 (1968) Nr. 15 S. 632-636, DE-PS 29 28 081). Da ferner die für diesen Verbundlager-Werkstoff eingesetzten Kunststoffe bei vergleichsweise hoher Belastung in der Wärme nicht formbeständig sind und auch wegen mangelnder Bearbeitbarkeit der Kunststoff-Gleitschicht die für zahlreiche Anwendungsfälle notwendige Maßgenauigkeit der daraus hergestellten Lagerelemente nicht erbracht werden kann, sind die Einsatzmöglichkeiten des Verbundlagerwerkstoffs stark eingeschränkt.

In der GB-PS 2 079 867 ist ein Verbundlager-Werkstoff mit Kunststoff-Gleitschicht vorgesehen, der aus einer Kombination von Metallrücken mit darauf aufgebrachter Gleitschicht aus Polyetheretherketon (PEEK), die gegebenenfalls zur Verbesserung der Oberflächeneigenschaften und zur Verschleißminderung Zusätze von PTFE und Graphit enthalten kann, besteht. Die nachbearbeitbare Kunststoff-Gleitschicht kann über eine aus porös aufgesinterter Bronze bestehende Rauhgrundschicht mit dem Metallrücken verbunden sein. Dieser Verbundlager-Werkstoff läßt bei vergleichsweise hoher Belastung noch eine relativ große Gleitgeschwindigkeit zu, allerdings ist seine Formbeständigkeit bei Temperaturen $>$ 160°C unter den modernen Brennkraftmaschinen herrschenden Belastungen nicht mehr gewährleistet.

Es ist die Aufgabe der vorliegenden Erfindung den Verbundlager-Werkstoff des eingangs beschriebenen Aufbaus so zu konzipieren, daß dieser bei Temperaturen von wenigstens 180 °C unter den in modernen Brennkraftmaschinenn herrschenden Belastungen formbeständig bleibt und auch Gleitgeschwindigkeiten von $>$ 30 m/s zuläßt.

Die Lösung dieser Aufgabe besteht erfindungsgemäß darin, daß das halogenfreie Polymere aus Polyethersulfon (PES) besteht.

Die Notlaufeigenschaften dieses Verbundlager-Werkstoffs können durch den Zusatz von Blei, PTFE, Graphit, Molybdänsulfid und dergleichen in einer Menge von 5 bis 40 Gew.% einzeln oder zu mehreren zu dem PES verbessert werden.

Durch den Zusatz von 5 bis 40 Gew.% Glasfasern, Glasperlen und/oder Kohlefasern läßt sich das Verschleißverhalten und die Belastbarkeit der aus PES bestehenden Gleitschicht verbessern.

Im folgenden ist ein Ausführungsbeispiel für die Herstellung des erfindungsgemäß aufgebauten Verbundlager-Werkstoffs mit Kunststoff-Gleitschicht beschrieben. Auf einen 1,7 mm dicken Stahlrücken wird eine poröse Schicht von 0,3 mm Dicke aus kugelförmigen Bronzepulver mit einer Korngröße von ca. 90 um und einer Zusammensetzung von 89 % Kupfer und 11 % Zinn bei einer Temperatur von ca. 800 °C aufgesintert. In einem anschließenden Walzprozeß wird auf die Bronzeschicht eine ca. 0,5 mm dicke Schicht aus einer
Mischung von 80 Gew.% PES und 20 Gew.% Blei aufgebracht,
durch welche die Poren der Bronzeschicht in der Weise
vollständig ausgefüllt werden, daß über den Spitzen der
Bronzeschicht eine ca. 0,2 mm dicke Gleitschicht der PES-
Blei-Mischung vorhanden ist. Die Bronzeschicht gewährleistet eine sehr gute Haftung zum Stahlrücken.

In einer weiteren vorteilhaften Ausführung wird auf einen
1,7 mm dicken Stahlrücken eine poröse Bronzeschicht von
0,3 mm Dicke aus knollenförmigem Bronzepulver in der mittleren Korngröße von 120 µm und einer Zusammensetzung von
80 Gew.% Kupfer, 10 Gew.% Blei und 10 Gew.% Zinn, bei
einer Temperatur von ca. 800°C aufgesintert. In einem anschließenden Walzprozeß wird darauf eine ca. 0,5 mm dicke
Schicht aus einer Mischung von 70 Gew.% PES und 30 Gew.%
Glasperlen aufgebracht, welche die Poren der Bronzeschicht
vollständig ausfüllt.

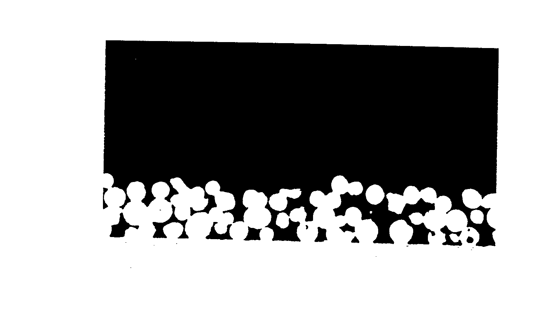

Der erfindungsgemäß aufgebaute Verbundlager-Werkstoff mit
Kunststoff-Gleitschicht ist in der Zeichnung beispielhaft
dargestellt. Auf dem Stahlstützrücken 1 befindet sich die
porös aufgesinterte Bronzeschicht 2, die mit der PES--
Blei-Mischung 3 so gefüllt ist, daß über den Spitzen der
Bronzeschicht eine Gleitschicht 4 der gleichen PES-Blei--
Mischung vorhanden ist.

Die mit dem erfindungsgemäß aufgebauten Verbundlager-Werkstoff, verglichen mit bekannten Lagerwerkstoffen, erzielten Vorteile bestehen insbesondere darin, daß dieser infolge seiner deutlich verbesserten Formbeständigkeit in
der Wärme bei vergleichsweise großer Belastung und relativ
hoher Gleitgeschwindigkeit auch zum Einatz in Brennkraftmaschinen geeignet ist.

PATENTANSPRÜCHE

1. Verbundlager-Werkstoff mit nachbearbeitbarer Kunststoff-Gleitschicht zur Herstellung von Gleitlagern, bestehend aus einem metallischen Rücken, vorzugsweise
   Stahlrücken mit einer porösen 0,1 bis 1,0 mm dicken
   Bronzeschicht, deren Füllung und 0,05 bis 1,0 mm dicke
   auf der Bronzeschicht befindliche Gleitschicht aus in
   der Wärme form- und chemisch beständigem halogenfreiem
   Polymerem besteht, dadurch gekennzeichnet, daß das halogenfreie Polymere Polyethersulfon (PES) ist.

2. Verbundlager-Werkstoff nach Anspruch 1, dadurch gekennzeichnet, daß das PES die Notlaufeigenschaften verbessernde Zusätze wie PTFE, Graphit, MoS$_2$ oder dergleichen in einer Menge von 5 bis 40 Gew.% einzeln oder zu
   mehreren enthält.

3. Verbundlager-Werkstoff nach Anspruch 1 und/oder Anspruch 2, dadurch gekennzeichnet, daß das PES die Verschleißeigenschaften und Belastbarkeit verbessernde Zusätze, wie Glasfasern, Kohlefasern und/oder Glasperlen
   in einer Menge von 5 bis 40 Gew.% einzeln oder zu mehreren enthält.

1/1

# 0 168 866

Europäisches
Patentamt

## EUROPÄISCHER RECHERCHENBERICHT

EP 85 20 0989

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 097 486  (KAMATICS CORP.) | | F 16 C  33/20<br>F 16 C  33/04 |
| A | EP-A-0 060 725  (AE PLC) | | |
| A | FR-A-2 237 083  (GARLOCK INC.) | | |

| | RECHERCHIERTE SACHGEBIETE (Int. Cl.4) |
|---|---|
| | F 16 C |

Der vorliegende Recherchenbericht wurde für alle Patentansprüche erstellt.

| Recherchenort DEN HAAG | Abschlußdatum der Recherche 07-10-1985 | Prüfer LEROY ALAIN |
|---|---|---|